# EUROPEAN PATENT APPLICATION

(11) **EP 4 678 076 A1**
(43) Date of publication of application: **14.01.2026**
(21) Application number: 25187753.6
(22) Date of filing: 07.07.2025
(51) Int. Cl.: A47J 37/06, A47J 37/07

(54) **BARBECUE COMPRISING ONE OR MORE GRILLS**

(30) Priority: 09.07.2024 IT 202400015766
(71) Applicant: Florence Follies S.r.l., 50127 Firenze (IT)
(72) Inventor: GRADI, Stefano, 50013 Campi Bisenzio (IT); PRIMATICI, Marco, 50018 Scandicci (IT); BETTI, Massimiliano, 50013 Campi Bisenzio (IT)
(74) Representative: Pizzoli, Antonio Mario

(57) **Abstract**

Barbecue comprising a main structure (20) with at least one heat generator (21) and a central support (32) which is arranged along a central axis (C) which is substantially vertical in the position of use of the barbecue, wherein the central support (32) comprises a plurality of seats (33) arranged radially with respect to the central axis (C), wherein the main structure (20) also comprises a circular rack (23) which can rotate with respect to the main structure (20) around the central axis (C).

## Description

### Technical field

This description concerns a barbecue, in particular a barbecue comprising one or more grills which can hold food to be cooked.

### Background of the description

Document EP 2572613 A1 describes a barbecue comprising a main structure with a central heat generator and a circular rack that can rotate relative to the main structure around a vertical central axis, wherein skewers are arranged in a radially projecting manner relative to the central axis and are provided with a toothed wheel meshed with the circular rack to rotate around their longitudinal axis when the circular rack is rotated. Additional food can be cooked on a circular grill arranged between the heat generator and the skewers when this food cannot be arranged on a skewer due to its shape and/or size. However, this known barbecue suffers from the technical problem of the difficulty in achieving homogeneous cooking of the food arranged on the circular grill, since this food can only be turned by a user manually and only by temporarily lifting the skewer or skewers arranged above it.

Document US 8850966 B2 describes a grill comprising two grill panels that can hold food to be cooked and that are provided with two extensions, one of which comprising a toothed wheel, to support the grill in a rotatable manner about a horizontal rotation axis in a rectangular barbecue provided with a mechanism with toothed wheels, each of which is meshed with a toothed wheel of a grill. However, this well-known barbecue has a relatively large surface area and constructional complexity in proportion to the amount of food that can be cooked, both because of the mechanical transmission required to rotate all the toothed wheels of the grills and because of the number of supports required to support the grills on at least two sides, since each grill, due to its weight and size, cannot easily be mounted in a projecting manner like the skewers of the barbecue of document EP 2572613 A1.

Document US 2015/0297028 A1 describes a barbecue according to the preamble of claim 1, which comprises a main structure and a central support, which can both rotate about a vertical central axis. A rotating basket can protrude from the central support and be manually rotated by means of a crank. This known barbecue has the technical problem of the difficulty of manually rotating the rotating basket about the central support when the central support in turn rotates about the vertical central axis.

### Summary of the description

Object of the present description is therefore to provide a barbecue that solves these problems. This object is achieved with a barbecue, the main characteristics of which are specified in the attached claims, to be considered an integral part of this description.

Thanks to its particular substantially triangular shape, the grill according to the present description can be easily used with the particular circular barbecue according to the present description, so that this barbecue not only is relatively compact, simple and therefore economical to manufacture, but can also evenly and automatically cook food that is placed on the grill and cannot be placed on a skewer.

The grill may also be equipped with a particular handle facilitating its displacement and/or with particular cut corners that allow the grill to be brought closer to the heat generator for faster cooking.

The grill may also comprise a particular frame that has an internal concavity that collects the food juices and keeps them in the grill during its rotation, especially if this grill is slightly inclined towards the central axis of the barbecue, so as to prevent the food from drying out and its juices from falling onto the heat generator. This frame is preferably made up of two portions that are joined by particular hinges and can be locked by particular catches, so as to facilitate the insertion and extraction of food into/from the grill.

The barbecue may comprise a particular main structure that reduces bulk, increases simplicity, facilitates use and improves the cooking of food in the barbecue. Preferably, the main structure has a particular upper edge that improves the safety of the barbecue without compromising its efficiency.

The main structure of the barbecue is preferably provided with particular forks that reduce friction and therefore wear and tear and the cost of the barbecue, especially if the latter is powered by an electric motor. The heat generator of the barbecue comprises particular removable containers that have shapes and extensions similar to those of the grills and that can contain fuel to cook the food in the grills, so as to facilitate the use of the barbecue and divide it into modular segments, since it is possible to use fewer grills and containers with fuel when the quantity of food to be cooked is relatively low, and/or differentiate the type or quantity of fuel depending on the food placed on each grill.

The barbecue and the grill can be sold in a particular kit comprising multiple grills that cover the entire barbecue, in order to facilitate the purchase and use by the users.

### Brief description of the drawings

Further advantages and features of the grill, barbecue and kit according to the present description will be apparent to those skilled in the art from the following detailed description of some embodiments, to be considered non-limiting examples of the claims, with reference to the attached drawings in which:
- figure 1 is a top view of an embodiment of the grill, in a closed position;
- figure 2 is a right side view of the grill of figure 1;
- figure 3 is a left side view of the grill of figure 1;
- figure 4 is section IV-IV of figure 1;
- figure 5 is a front view of the grill of figure 1;
- figure 6 is a rear view of the grill of figure 1;
- figure 7 is the enlarged section VII-VII of figure 1;
- figure 8 is a bottom view of the grill of figure 1;
- figure 9 is a top view of the grill of figure 1, in an open position;
- figure 10 is a side view of an embodiment of the barbecue;
- figure 11 is a top view of the barbecue in figure 10;
- figure 12 is section XII-XII of figure 11;
- figure 13 is the enlarged section of detail XIII of figure 11.

### Exemplary embodiments

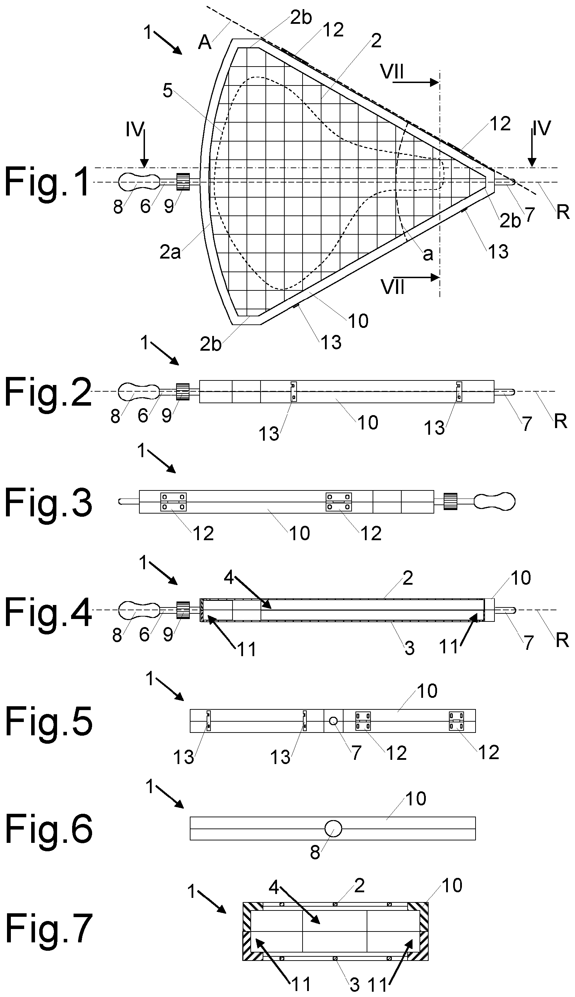

Figures 1 to 9 show an embodiment of the grill 1, which comprises at least two grill panels 2, 3 that delimit a space 4 that is arranged between the grill panels 2, 3 and in which food 5 (shown with dotted lines in figure 1), for example one or more slices of meat, can be placed to be cooked, in particular by means of a barbecue. The grill panels 2, 3 may comprise metal meshes that are the same or different from each other. The grill panels 2, 3 are arranged between at least two extensions 6, 7 which are configured to support the grill 1 rotatably about a rotation axis R and are joined to at least one of the grill panels 2, 3. The rotation axis R of the grill 1 passes through the space 4 between the grill panels 2, 3 and/or is arranged on a plane substantially parallel to the grill panels 2, 3 and/or substantially equidistant from the grill panels 2, 3. Preferably, the first extension 6 or both extensions 6, 7 comprise a pin extending along the rotation axis R, and/or at least the first extension 6 is provided with a handle 8, so that a user can grip the handle 8 to pick up and move the grill 1, for example to place it on a barbecue. At least one extension 6, 7, in particular the first extension 6, comprises a toothed wheel 9 with its longitudinal axis substantially aligned with the rotation axis R of the grill 1. Preferably, the handle 8 has a substantially symmetrical shape with respect to the rotation axis R and/or the toothed wheel 9 is arranged on the first extension 6 between the handle 8 and the grill panels 2, 3.

The grill panels 2, 3 have a substantially triangular shape, in particular a substantially isosceles triangle shape, with two sides and a substantially rectilinear or substantially convex base 2a, 2b towards the outside of the triangle, wherein the first extension 6 is arranged at the base 2a, 3a of the triangle and the second extension 7 is arranged at the vertex between the two sides of the triangle, i.e. the vertex of the triangle opposite the base 2a, 3a of the triangle. Preferably, the base 2a, 3a of the grill panels 2, 3 extends along an arc of a circle, and/or the vertex of the triangle covers a vertex angle a (indicated by a dotted arc in figure 1) of (350-360°)/n, where n is an integer greater than 3, wherein the first extension 6 is arranged at the centre of the base 2a, 3a of the triangle and the second extension 7 is arranged at the angle a. In the present embodiment, the number n is equal to 6, so that the angle a is approximately 58-60°. Preferably, one or more corners of the grill panels 2, 3 are cut so as to form a substantially rectilinear connecting side 2b, 3b.

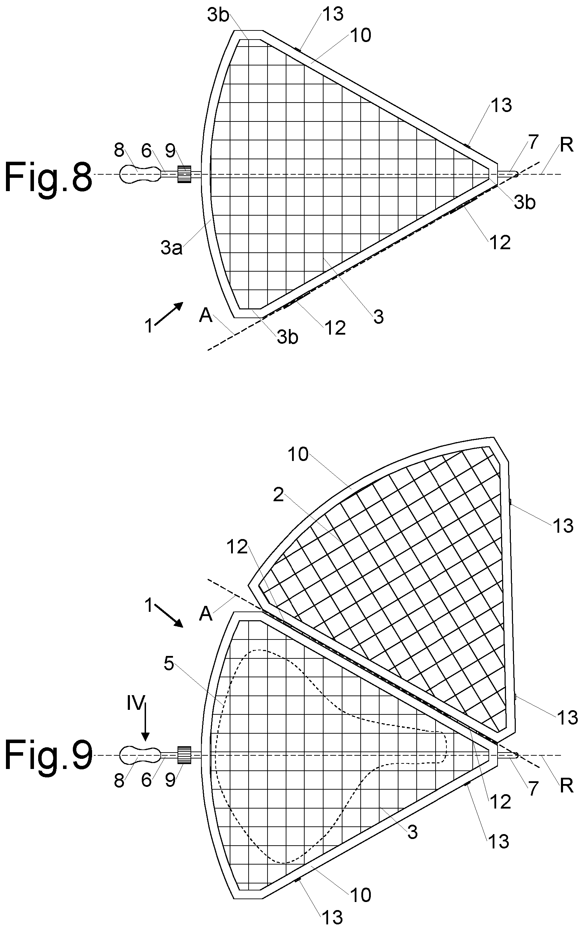

Preferably, a frame 10 having at least one internal concavity 11 facing the space 4 between the grill panels 2, 3 is arranged around the grill panels 2, 3, in particular completely surrounding them, and connects the grill panels 2, 3 to each other. In particular, the frame 10 has a cross-section substantially in the shape of a rectangular C, with the cavity of the rectangular C corresponding to the internal concavity 11 of the frame 10. Preferably, the frame 10 is formed by at least two portions which are joined together by one or more hinges 12, wherein each portion of the frame 10 is joined to a grill panel 2, 3, so that by rotating a portion of the frame 10 with respect to the other portion of the frame 10 by means of the hinge(s) 12, the grill 1 can be closed or opened by a user respectively to retain the food 5 in the space 4 in the closed position (as in figure 1) or to insert/extract the food 5 in/from space 4 in the open position (as in figure 9). The two portions of the frame 10 are substantially the same and/or are also provided with one or more latches 13 which in their locked position keep the two portions of the frame 10 joined together to prevent accidental opening of the grill 1 during its rotation around the rotation axis R. Preferably, the hinge(s) 12 and the latch(es) 13 are respectively arranged on the first side and on the second side of the two sides of the grill panels 2, 3 which converge towards the vertex of the grill panels 2, 3 which is provided with the second extension 7, and/or the opening/closing axis A of the hinge(s) 12 intersects the rotation axis R of the grill 1 at the second extension 7. The hinge(s) 12 and/or the latch(es) 13 can be fixed to the frame 10 (as in the present embodiment), to the grill panels 2, 3 and/or to other elements integral with the grill panels 2, 3.

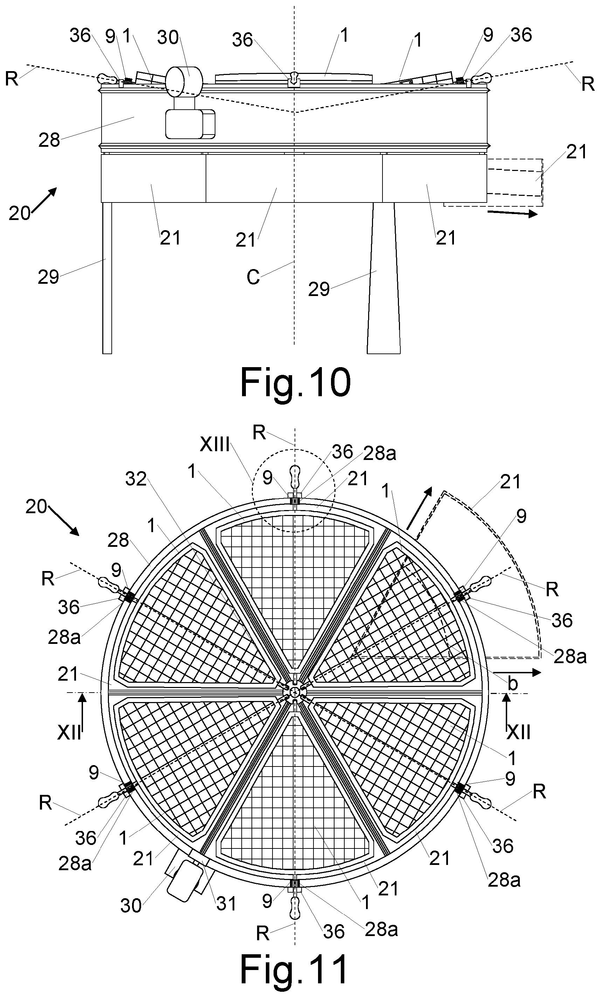

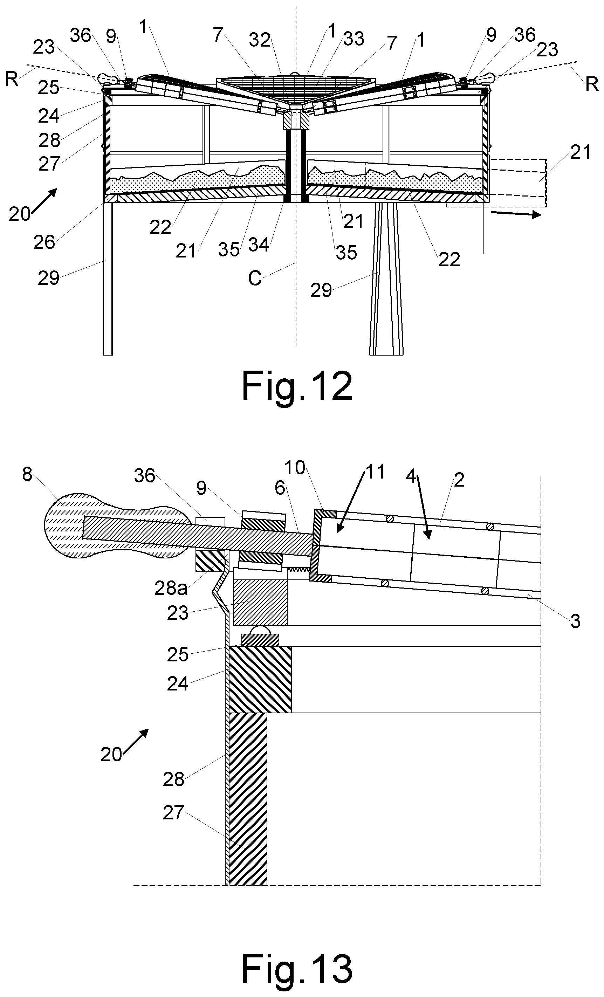

Figures 10 to 13 show an embodiment of the barbecue, which comprises a main structure 20 with a heat generator, in particular comprising at least one container 21 suitable for containing fuel 22 (shown only in figure 10), for example coal or wood, to be burned to cook food placed in the barbecue. The main structure 20 also comprises a circular rack 23, i.e. a toothed wheel in which the teeth protrude axially, in particular upwards (in the position of use of the barbecue in figure 10), which can rotate with respect to the main structure 20 around a central axis C which is substantially vertical in the position of use of the barbecue. The main structure 20 has a substantially cylindrical shape with the axis of the cylinder substantially aligned with the central axis C.

The main structure 20 may comprise an upper support 24, in particular an annular element having substantially the same diameter as the circular rack 23, which is provided with bearings 25 to rotatably support the circular rack 23. The main structure 20 may also comprise a lower support 26, in particular an annular element having substantially the same diameter as the circular rack 23, which is joined to the upper support 24 by a plurality of uprights 27. An outer wall 28 may be arranged around the main structure 20 and have an upper edge that extends towards the central axis C and at least partially covers the circular rack 23. Legs 29 may be fixed under the lower support 26 to support the main structure 20. An actuator 30, in particular an electric motor that can be operated by a user and be provided with a reducer and/or an inverter, is fixed to the main structure 20, in particular to the outer wall 28, to rotate the circular rack 23 around the central axis C, in particular by means of a toothed wheel (not visible in the figures) meshed with the circular rack 23. Said toothed wheel of the actuator 30 is arranged in a notch obtained in the upper edge of the external wall 28 and is preferably covered by a casing 31 arranged above this notch.

The main structure 20 comprises a central support 32 which is arranged along the central axis C and comprises a plurality of seats 33 arranged radially with respect to the central axis C. In particular, the seats 33 comprise a semi-cylindrical channel which is oriented radially with respect to the central axis C. The central support 32 is preferably arranged above a central column 34 which is fixed to the lower support 26 of the main structure 20 by means of a plurality of radial supports 35, in particular bars.

One or more containers 21 of the heat generator may slide over the radial supports 35 to be withdrawn in a radial direction from the main structure 20 in the direction of the arrows shown in figures 10-12, which also show, with dashed lines, the position of a container 21 during its extraction from the main structure 20. At least one container 21 has a prismatic shape with a substantially triangular base and a wall that is substantially flat or substantially convex toward the outside of the main structure 20, so that the container 21 has a prismatic shape with a substantially triangular base with a central dihedral angle b, in particular a dihedral angle b of (350-360°)/n, where n is an integer greater than 3. In the present embodiment the number n=6, so that the dihedral angle b is approximately 58-60°. The radial supports 35 are preferably inclined, in particular at an angle of 3-10°, upwards and towards the central axis C, so that a container 21 descends slightly when it slides outwards from the main structure 20. The central support 32 and/or the central column 34 may comprise an axial hole.

Preferably, the main structure 20 of the barbecue according to the present description rotatably supports at least one grill 1 according to the present description, in particular a number n of grills 1, where n is an integer greater than 3, wherein the toothed wheel 9 of the grill 1 is meshed with the circular rack 23 of the barbecue and the second extension 7 of the grill 1 is arranged in a seat 33 of the central support 32, so that the grill 1 can rotate about its rotation axis R when the circular rack 23 rotates about the central axis C. The central support 32 is preferably arranged at a lower level than the teeth of the circular rack 23, so that, in use, the rotation axis R of the grill 1 is inclined, in particular at an angle of 5°-15°, downwards and towards the central axis C. The upper edge of the outer wall 28 of the main structure 20 may be provided with notches 28a which leave the circular rack 23 exposed and are therefore suitable for hosting the toothed wheel 9 of a grill 1. The external wall 28 of the main structure 20 is preferably provided with forks 36 configured to rotatably and removably retain the first extension 6 of a grill 1, with the handle 8 of the grill 1 protruding from the main structure 20 and/or with the toothed wheel 9 of the grill 1 which is meshed with the circular rack 23 but does not rest on the circular rack 23, so that a small gap remains between the toothed wheel 9 and the circular rack 23.

The barbecue according to the present description may be sold as a kit comprising the barbecue and a number n of grills 1, where n is an integer greater than 3 and said vertex of the grill panels 2, 3 of each grill 1 covers a vertex angle a of (350-360°)/n, so that the grills 1, in use, can cover substantially the entire main structure 20 of the barbecue. The barbecue of the kit preferably also comprises a number n of containers 21 arranged under each grill 1.

All components of the grill 1, except the handle 8, and of the barbecue are preferably made of metal.

As seen in the figures, in the present embodiment of the barbecue the heat generator 21 and the central support 32 are configured not to rotate with respect to the central axis C and the main structure 20 when the circular rack 23 is operated to rotate with respect to the main structure 20 around the central axis C.

Variations or additions may be made by those skilled in the art to the embodiments described and illustrated herein, while remaining within the scope of the following claims. In particular, further embodiments may comprise the technical characteristics of one of the following claims with the addition of one or more technical characteristics described in the text or illustrated in the drawings, taken individually or in any mutual combination and comprising their equivalent characteristics.

Furthermore, the terms used in the text and/or drawings are to be understood as inclusive terms, unless otherwise specified, so for example the terms "a", "comprising", "including a", "having two" or "provided with" mean respectively "at least one", "comprising, but not limited to", "including at least one", "having two or more" or "provided with at least one".

Angles, proportions and values quoted in the text and/or shown in the drawings comprise a tolerance of at least 5%, unless otherwise specified.

## Claims

1. Barbecue comprising a main structure (20) with at least one heat generator (21) and a central support (32) which is arranged along a central axis (C) which is substantially vertical in the position of use of the barbecue, wherein the central support (32) comprises a plurality of seats (33) arranged radially with respect to the central axis (C), **characterised in that** the main structure (20) also comprises a circular rack (23) which can rotate with respect to the main structure (20) around the central axis (C).

2. Barbecue according to the preceding claim, wherein the main structure (20) has a substantially cylindrical shape, with the axis of the cylinder substantially aligned with the central axis (C), and comprises an upper support (24), which is provided with bearings (25) to rotatably support the circular rack (23), and a lower support (26) which is joined to the upper support (24) by means of a plurality of uprights (27).

3. Barbecue according to the preceding claim, wherein the central support (32) is arranged above a central column (34) which is fixed to the lower support (26) of the main structure (20) by means of a plurality of radial supports (35) which are inclined upwards and towards the central axis (C).

4. Barbecue according to one of the preceding claims, wherein an external wall (28) is arranged around the main structure (20) and has an upper edge that extends towards the central axis (C), at least partially covers the circular rack (23) and is provided with a plurality of notches (28a) that leave the circular rack (23) uncovered.

5. Barbecue according to one of the preceding claims, wherein the heat generator (21) comprises at least one container (21) which is configured to be extracted in a radial direction from the main structure (20) and has a prismatic shape with a substantially triangular base and a wall which is substantially flat or substantially convex towards the outside of the main structure (20).

6. Barbecue according to one of the preceding claims, wherein the central support (32) is arranged at a lower level than the teeth of the circular rack (23).

7. Barbecue according to one of the preceding claims, wherein the heat generator (21) and the central support (32) are configured not to rotate with respect to the central axis (C) and the main structure (20) when the circular rack (23) is operated to rotate with respect to the main structure (20) around the central axis (C).

8. Barbecue according to one of the preceding claims, which comprises at least one grill (1), wherein the main structure (20) rotatably supports the grill (1), wherein the grill (1) comprises at least two grill panels (2, 3) which delimit a space (4) which is arranged between the grill panels (2, 3) and in which food (5) to be cooked can be placed, wherein the grill panels (2, 3) are arranged between at least two extensions (6, 7) which are configured to rotatably support the grill (1) around a rotation axis (R) and are joined to at least one of the two grill panels (2, 3), wherein at least one extension (6) of the two extensions (6, 7) comprises a toothed wheel (9) with its longitudinal axis substantially aligned with the rotation axis (R) of the grill (1), wherein the grill panels (2, 3) have a substantially triangular shape, wherein the first extension (6) of the two extensions (6, 7) is arranged at a base (2a, 3a) of the triangle, which base (2a, 3a) is substantially rectilinear or substantially convex towards the outside of the triangle, and the second extension (7) of the two extensions (6, 7) is arranged at the vertex of the triangle opposite to this base (2a, 3a) of the triangle, wherein the toothed wheel (9) of the grill (1) is meshed with the circular rack (23) of the barbecue and the second extension (7) of the grill (1) is arranged in a seat (33) of the central support (32) of the barbecue, so that the grill (1) can rotate around its rotation axis (R) when the circular rack (23) rotates around the central axis (C).

9. Barbecue according to the preceding claim, wherein the main structure (20) is provided with forks (36) configured to rotatably and removably retain the first extension (6) of the grill (1), with the toothed wheel (9) of the grill (1) which is meshed with the circular rack (23) but does not rest on the circular rack (23).

10. Barbecue according to claim 8 or 9, wherein the first extension (6) or both extensions (6, 7) of the grill (1) comprise a pin extending along the rotation axis (R), wherein the first extension (6) is provided with a handle (8) and the toothed wheel (9) is arranged on the first extension (6) between the handle (8) and the grill panels (2, 3).

11. Barbecue according to one of claims 8 to 10, wherein a frame (10) having at least one internal concavity (11) facing the space (4) between the grill panels (2, 3) is arranged around the grill panels (2, 3) and connects the grill panels (2, 3) to each other.

12. Barbecue according to the preceding claim, wherein the frame (10) is formed by at least two portions which are joined together by one or more hinges (12), wherein each portion of the frame (10) is joined to a grill panel (2, 3).

13. Barbecue according to the preceding claim, wherein the two portions of the frame (10) are substantially equal and are provided with one or more latches (13) which in their locked position keep the two portions of the frame (10) joined together.

14. Barbecue according to the preceding claim, wherein the hinge(s) (12) and the latch(es) (13) are respectively arranged on the first side and on the second side of the two sides of the grill panels (2, 3) which converge towards the vertex of the grill panels (2, 3) provided with the second extension (7).

15. Barbecue according to one of claims 8 to 14, which comprises a number n of grills (1), where n is an integer greater than 3 and said vertex of the grill panels (2, 3) of each grill (1) covers a vertex angle (a) of (350-360°)/n.
